# EUROPEAN PATENT SPECIFICATION

(11) **EP 4 253 092 B1**
(45) Date of publication and mention of the grant of the patent: **07.05.2025**
(21) Application number: 23163035.1
(22) Date of filing: 21.03.2023
(51) Int. Cl.: B60C 11/11, B60C 11/13, B60C 11/03, B60C 11/12

(54) **TIRE**
REIFEN
PNEUMATIQUE

(30) Priority: 31.03.2022 JP 2022060431
(43) Date of publication of application: 04.10.2023
(73) Proprietor: Sumitomo Rubber Industries, Ltd., Kobe-shi, Hyogo-ken 651-0072 (JP)
(72) Inventor: YAO, Masahiro, Kobe-shi, Hyogo 651-0072 (JP)
(74) Representative: Manitz Finsterwald Patent- und Rechtsanwaltspartnerschaft mbB

(56) References cited:
- EP-A1- 3 505 369
- EP-A2- 3 015 287
- US-A1- 2019 255 889
- US-A1- 2020 156 416

## Description

### RELATED APPLICATIONS

This application claims the benefit of foreign priority to Japanese Patent Applications No. JP2022-060431, filed March 31, 2022.

### FIELD OF THE INVENTION

The present invention relates to a tire.

### BACKGROUND OF THE INVENITON

Japanese Unexamined Patent Application Publication No. 2021-62655 has described a tire having a tread portion provided with a plurality of crown blocks. Each of the crown blocks includes a chamfered portion surrounding the entire circumference of a ground contacting surface thereof, and a stepped portion provided inside the chamfered portion in a tire radial direction.

A tire in accordance with the preamble of claim 1 is known from EP 3 505 369 A1. Related tires are described in US 2019/255889 A1, EP 3 015 287 A2 and US 2020/156416 A1.

### SUMMARY OF THE INVENTION

In recent years, there has been a demand for further improvement in on-snow performance while maintaining anti-wear performance for tires, especially tires for SUVs.

The present invention was made in view of the above, and a primary object thereof is to provide a tire capable of further improving the on-snow performance while maintaining the anti-wear performance.

The object is solved by a tire having the features of claim 1. Sub-claims are directed at preferable embodiments of the invention.

The present invention is a tire including a tread portion wherein the tread portion includes a first tread edge, a first shoulder circumferential groove adjacent to the first tread edge and arranged between the first tread edge and a tire equator, a plurality of crown blocks arranged inside the first shoulder circumferential groove in a tire axial direction, and a plurality of crown grooves arranged axially inside the first shoulder circumferential groove to separate the crown blocks from each other,
the crown blocks include a plurality of first crown blocks adjacent to the first shoulder circumferential groove,
each of the first crown blocks includes a ground contacting surface and a block wall surface extending inward in a tire radial direction from the ground contacting surface,
the block wall surface includes a first block wall surface adjacent to one of the crown grooves and a second block wall surface adjacent to the first shoulder circumferential groove,
the first block wall surface is provided with a chamfered portion on the ground contacting surface side in a range of 50% or more of a length of the first block wall surface measured along the ground contacting surface,
the second block wall surface is either not provided with the chamfered portion on the ground contacting surface side or provided with the chamfered portion on the ground contacting surface side in a range of less than 50% of a length of the second block wall surface measured along the ground contacting surface,
the tread portion further includes a plurality of shoulder blocks arranged axially outside the first shoulder circumferential groove and a plurality of shoulder grooves extending axially outward from the first shoulder circumferential groove to separate the shoulder blocks from each other,
each of the shoulder blocks includes a ground contacting surface and a shoulder block wall surface extending radially inward from the ground contacting surface,
the shoulder block wall surface includes a third block wall surface adjacent to one of the shoulder grooves and a fourth block wall surface adjacent to the first shoulder circumferential groove, and
the third block wall surface is not provided with the chamfered portion on the ground contacting surface side,
the shoulder block wall surface includes a cutout portion recessed toward inside of the ground contacting surface, and
the cutout portion has a depth in the tire radial direction of 10% or more and 40% or less of a height in the tire radial direction of the each of the shoulder blocks.

According to an embodiment of the invention, the first block wall surface is provided with the chamfered portion in the range of 100% of the length of the first block wall surface.

According to an embodiment of the invention, the first block wall surface includes a wall surface main body extending radially inward from the chamfered portion, and a difference (θ1-θ2) between an angle θ1 of the chamfered portion with respect to a normal line of the ground contacting surface and an angle θ2 of the wall surface main body with respect to the normal line is 10 degrees or more and 30 degrees or less.

According to an embodiment of the invention, the chamfered portion has a length in the tire radial direction of 20% or more and 40% or less of a length in the tire radial direction of the block wall surface.

According to an embodiment of the invention, an angle θ1 of the chamfered portion with respect to a normal line of the ground contacting surface is 10 degrees or more and 30 degrees or less.

According to an embodiment of the invention, the fourth block wall surface is not provided with the chamfered portion on the ground contacting surface side.

According to an embodiment of the invention, a total area of the recessed portions of the shoulder block wall surfaces of the shoulder blocks is 1% or more and 5% or less of a total area of the ground contacting surfaces of the shoulder blocks in a tread plan view.

According to an embodiment of the invention, the crown blocks include a plurality of second crown blocks arranged axially inside the first crown blocks, each of the second crown blocks includes a ground contacting surface and a block wall surface extending radially inward from the ground contacting surface, and in each of the second crown blocks, the block wall surface is provided with a chamfered portion on the ground contacting surface side in a range of 50% or more of a length of the block wall surface measured along the ground contacting surface.

According to an embodiment of the invention, a total area of the chamfered portions of the crown blocks is 1% or more and 5% or less of a total area of the ground contacting surfaces of the crown blocks in a tread plan view.

It is possible that the tire of the present invention further improves the on-snow performance while maintain the anti-wear performance by adopting the above-mentioned configuration.

### BRIEF DESCRIPTION OF THE DRAWINGS

FIG. 1 is a plan view of a tread portion according to an embodiment of the present invention.
FIG. 2 is a plan view of one of first crown blocks of FIG. 1.
FIG. 3A is an A-A cross sectional view of FIG. 1.
FIG. 3B is a B-B cross sectional view of FIG. 1.
FIG. 4 is a plan view of one of laterally long blocks.
FIG. 5 is a plan view of one of second crown blocks of FIG. 1.
FIG. 6 is a C-C cross sectional view of FIG. 1.
FIG. 7 is a plan view of shoulder blocks.
FIG. 8 is a D-D cross sectional view of FIG. 7.
FIG. 9 is a plan view of the tread portion according to another embodiment.

### DETAILED DESCRIPTION OF THE INVENTION

An embodiment of the present invention will now be described below in conjunction with accompanying drawings.

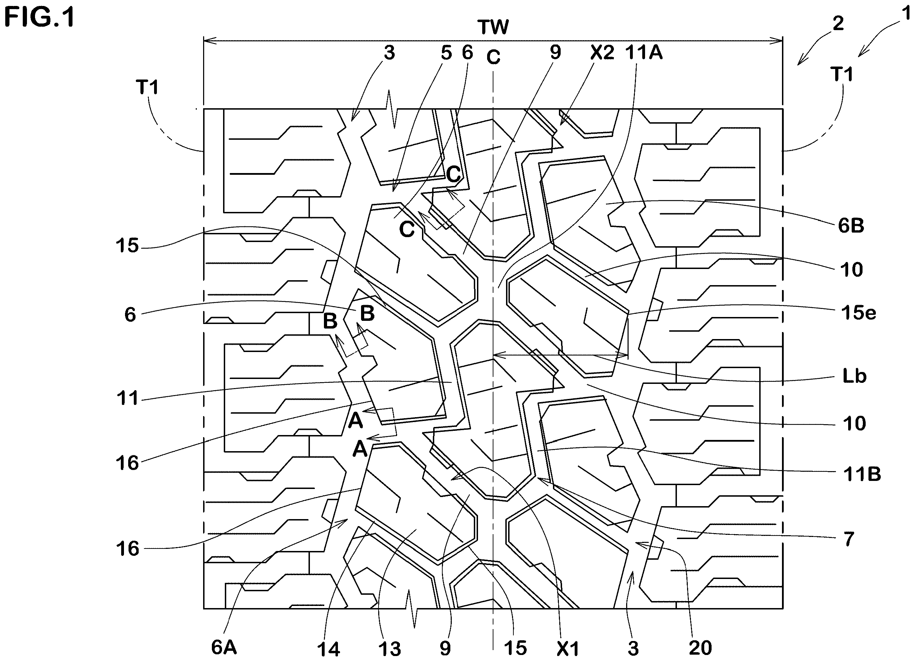

FIG. 1 is a developed plan view of a tread portion 2 of a tire 1 of the present embodiment. The present invention is applied to pneumatic tires for SUVs suitable for running on rough terrain, for example. The present invention can also be applied to pneumatic tires for passenger cars and for heavy duty, and non-pneumatic tires configured not to be filled with compressed air.

As shown in FIG. 1, the tread portion 2 of the present embodiment includes a first tread edge T1, a first shoulder circumferential groove 3, a plurality of crown blocks 5 and a plurality of crown grooves 9. The first shoulder circumferential groove 3 is arranged between the first tread edge T1 and a tire equator (C) and adjacent to the first tread edge T1. The crown blocks 5 are arranged inside the first shoulder circumferential groove 3 in a tire axial direction. The crown grooves 9 are arranged axially inside the first shoulder circumferential groove 3 and demarcate the crown blocks 5.

The crown blocks include a plurality of first crown blocks 6 adjacent immediately to the first shoulder circumferential groove 3. Each of the first crown blocks 6 includes a ground contacting surface 13 and a block wall surface 14 extending radially inward from the ground contacting surface 13.

The block wall surface 14 includes a first block wall surface 15 adjacent to (so as to face) one of the crown grooves 9 and a second block wall surface 16 adjacent to (so as to face) the first shoulder circumferential groove 3. In other words, the second block wall surface 16 is arranged axially outside the first block wall surface 15.

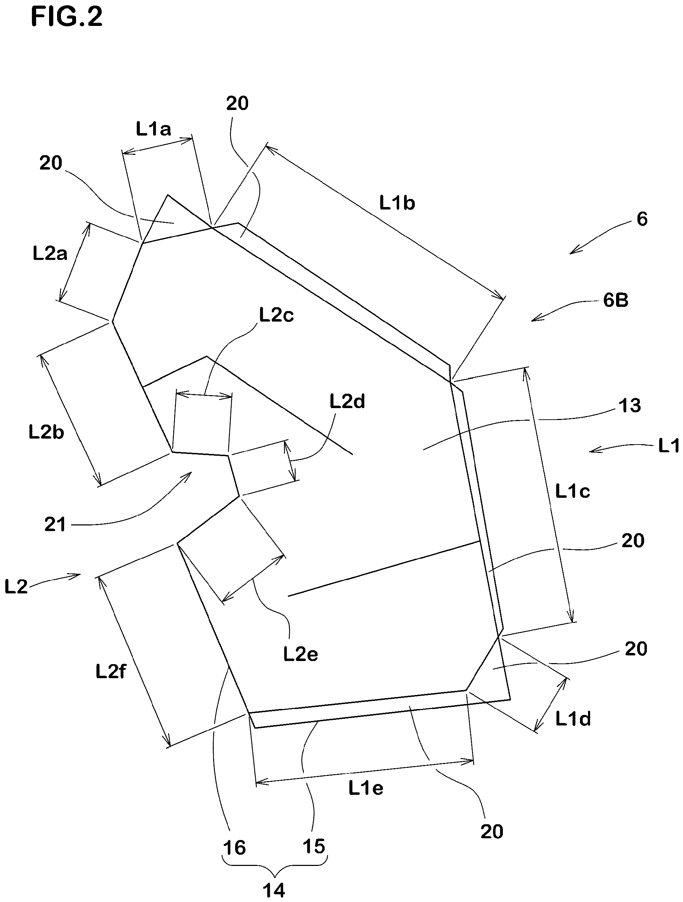

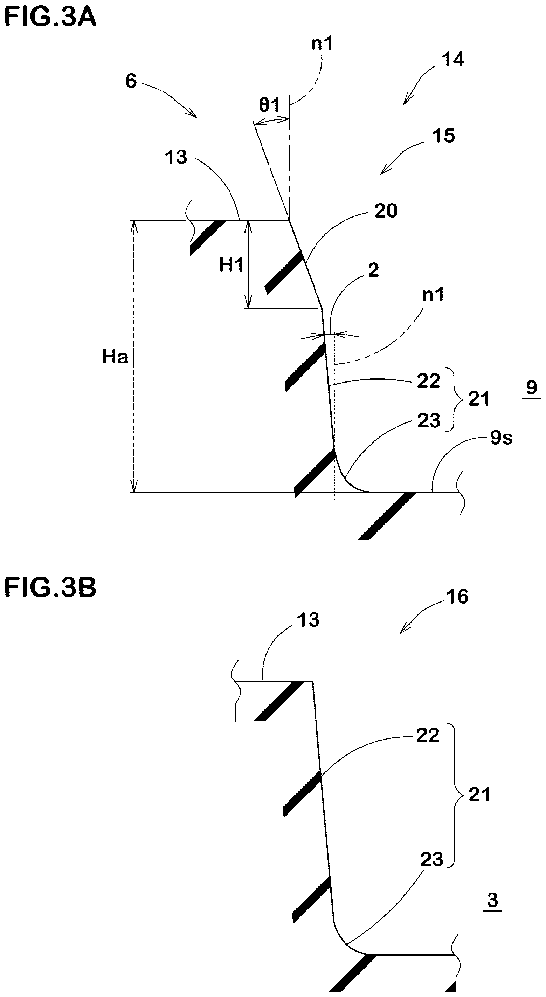

FIG. 2 is an enlarged view of one of the first crown blocks 6. FIG. 3A is an A-A cross-sectional view of FIG. 1 and FIG. 3B is a B-B cross-sectional view of FIG. 1. As shown in FIGs. 2, 3A, and 3B, the first block wall surface 15 is provided with a chamfered portion 20 extending 50% or more of a length L1 of the first block wall surface 15 measured along the ground contacting surface 13 (measured along the contour of the ground contacting surface 13 in this case, the same applies hereinafter). In the present specification, the length L1 of the first block wall surface 15 is defined as the sum of the lengths of the linearly extending portions, and in the case of the first crown block shown in FIG. 2, the length L1 is the sum of a length (L1a), a length (L1b), a length (L1c), a length (L1d), and a length (L1e). The first block wall surface 15 configured as such has great rigidity and thus enhances the basic anti-wear performance of the block. The second block wall surface 16 is not provided with the chamfered portion on the ground contacting surface 13 side or provided with the chamfered portion 20 arranged on the ground contacting surface 13 side and extending less than 50% of a length L2 (not shown) of the second block wall surface 16 measured along the ground contacting surface 13. The length L2 of the second block wall surface 16 is also defined by the sum of the lengths of the linearly extending portions, and in the case of the first crown block 6 shown in FIG. 2, the length L2 is the sum of a length (L2a), a length (L2b), a length (L2c), a length (L2d), a length (L2e), and a length (L2f). The second block wall surface 16 configured as such exerts a high edge effect on snowy roads and thus improves the on-snow performance. Further, since a relatively small ground contact pressure acts on the second block wall surface 16, wear is suppressed even if the chamfered portion 20 is not provided. Therefore, the tire 1 of the present embodiment can further improve the on-snow performance while maintaining the anti-wear performance. Furthermore, the tire 1 configured as such has excellent steering stability performance and excellent wet performance. The second block wall surface 16 of the present embodiment does not have a chamfered portion formed on the ground contacting surface 13 side, therefore, it exerts high on-snow performance.

In order to improve the anti-wear performance, the first block wall surface 15 is provided with the chamfered portion 20 in the range of 70% or more, more preferably in the range of 85% or more of the length L1 of the first block wall surface 15. In the present embodiment, the first block wall surface 15 has the chamfered portion 20 formed in the range of 100% of the length L1 of the first block wall surface 15. In a tread plan view, the first block wall surface 15 extends in a zigzag shape.

An angle θ1 of the chamfered portion 20 with respect to a normal line (n1) of the ground contacting surface 13 is preferably 10 degrees or more, more preferably 15 degrees or more, and preferably 30 degrees or less, and even more preferably 25 degrees or less. Since the angle θ1 of the chamfered portion 20 is 10 degrees or more, the anti-wear performance is maintained high. In addition, since drainage property is enhanced, the wet performance is improved. Since the angle θ1 of the chamfered portion 20 is 30 degrees or less, high on-snow performance is exerted.

The first block wall surface 15 includes a wall surface main body 21 extending inward in the tire radial direction from the chamfered portion 20. The wall surface main body 21 in the present embodiment includes a linear portion 22 extending linearly in the tire radial direction over the entire length thereof, and an arcuate portion 23 extending in an arc shape to connect the linear portion 22 and a groove bottom (9s) of one of the crown grooves 9 adjacent thereto. It should be noted that the wall surface main body 21 is not limited to such an aspect, and for example, the wall surface main body 21 may include a large arcuate portion (not shown) having a larger radius of curvature than the arcuate portion 23 and connecting the arcuate portion 23 with the chamfered portion 20.

A difference (θ1-θ2) between the angle θ1 of the chamfered portion 20 and an angle θ2 of the wall surface main body 21 with respect to the normal line (n1) is preferably 10 degrees or more, more preferably 15 degrees or more, and preferably 30 degrees or less, and more preferably 25 degrees or less. Since the difference (θ1-θ2) is 10 degrees or more, the rigidity of the first crown blocks 6 can be maintained high, thereby, the anti-wear performance is maintained. Since the difference (θ1-θ2) is 30 degrees or less, the wall surface main body 21 secures the shearing force on a snowy road surface, therefore, the on-snow performance is improved. The angle θ2 of the wall surface main body 21 is specified by the angle of the linear portion 22.

A length H1 in the tire radial direction of the chamfered portion 20 is preferably 20% or more, more preferably 25% or more, and preferably 40% or less, more preferably 35% or less of a length (Ha) in the tire radial direction of the block wall surface 14. Since the length H1 of the chamfered portion 20 is 20% or more of the length (Ha) of the block wall surface 14, the anti-wear performance is maintained. Since the length H1 of the chamfered portion 20 is 40% or less of the length (Ha) of the block wall surface 14, the improving effect of the on-snow performance is ensured.

As shown in FIG. 3B, the second block wall surface 16 in the present embodiment is formed by the wall surface main body 21, which includes the linear portion 22 and the arcuate portion 23. The second block wall surface 16 is formed only by the wall surface main body 21 at 100% of the length L2 of the second block wall surface 16 measured along the ground contacting surface 13, for example.

As shown in FIG. 1, the tread portion 2 of the present embodiment adopts a point-symmetrical pattern with an arbitrary point on the tire equator (C) as the center of symmetry. Thereby, the tread portion 2 of the present embodiment is provided with a pair of the first tread edges T1 and a pair of the first shoulder circumferential grooves 3. It should be noted that the tread portion 2 may be configured as a line-symmetrical pattern with the tire equator (C) as the axis of symmetry, for example. Further, the tread portion 2 is not limited to the point-symmetric pattern or the line-symmetric pattern.

The first tread edges T1 are defined as the outermost ground contact positions in the tire axial direction when the tire 1 in a standard state is in contact with a flat surface with zero camber angle by being loaded with a standard tire load. A tread width TW is the distance in the tire axial direction between the first tread edges T1.

The term "standard state" refers to a state in which the tire 1 is mounted on a standard rim (not shown), inflated to a standard inner pressure, and loaded with no tire load. Dimensions of various parts of the tire 1 are the values measured in this standard state Unless otherwise specified.

The term "standard rim" refers to a wheel rim specified for the concerned tire by a standard included in a standardization system on which the tire is based, for example, the "normal wheel rim" in JATMA, "Design Rim" in TRA, and "Measuring Rim" in ETRTO.

The term "standard inner pressure" refers to air pressure specified for the concerned tire by a standard included in a standardization system on which the tire is based, for example, the maximum air pressure in JATMA, maximum value listed in the "TIRE LOAD LIMITS AT VARIOUS COLD INFLATION PRESSURES" table in TRA, and "INFLATION PRESSURE" in ETRTO.

The term "standard tire load" refers to a tire load specified for the concerned tire by a standard included in a standardization system on which the tire is based, for example, the "maximum load capacity" in JATMA, maximum value listed in "TIRE LOAD LIMITS AT VARIOUS COLD INFLATION PRESSURES" table in TRA, and "LOAD CAPACITY" in ETRTO.

In each of the first crown blocks 6, the first block wall surface 15 has an outer end (15e) in the tire axial direction positioned at a distance (Lb) from the tire equator (C) in the tire axial direction and the distance (Lb) is in the range from 40% to 60% of the tread width TW. The outer end (15e) of the first block wall surface 15 is provided with the chamfered portion 20. Therefore, the anti-wear performance is maintained high.

The crown grooves 9 include a plurality of crown lateral grooves 10 extending in the tire axial direction to connect between the first shoulder circumferential grooves 3, and a plurality of crown joint grooves 11 each connecting a pair of the crown lateral grooves 10 adjacent to each other in a tire circumferential direction. Each of the crown lateral grooves 10 extends in a zigzag manner, for example. The crown joint grooves 11 in the present embodiment include first crown joint grooves 11A each extending linearly on the tire equator (C) and second crown joint grooves 11B each shifted from the tire equator (C) in the tire axial direction and extending in an L-shape.

The first crown blocks 6 in the present embodiment include laterally long blocks 6A each having a circumferential length smaller than an axial length thereof, and vertically long blocks 6B each having a circumferential length larger than an axial length thereof. The laterally long blocks 6A and the vertically long blocks 6B are arranged alternately in the tire circumferential direction, for example. The first crown block 6 shown in FIG. 2 is the vertically long block 6B.

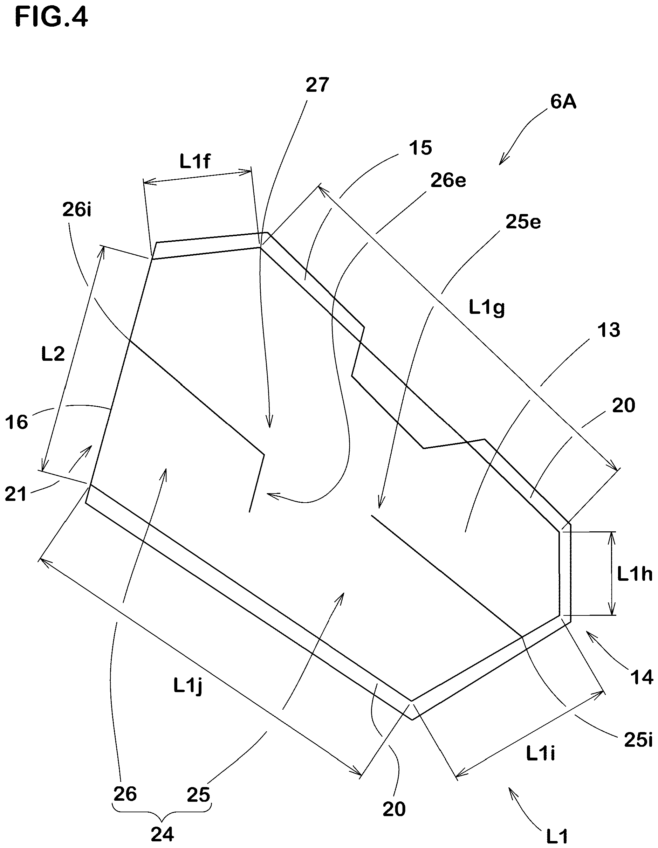

FIG. 4 is a plan view of one of the laterally long blocks 6A. As shown in FIGs. 2 and 4, each of the laterally long blocks 6A and the vertically long blocks 6B in the present embodiment is provided with the chamfered portion 20 at 50% or more of the length L1 of the first block wall surface 15. Each of the laterally long blocks 6A and the vertically long blocks 6B is provided with the chamfered portion 20 preferably in the range of 85% or more of the length L1, and more specifically, it is even more preferred that the chamfered portion 20 is provided in the range of 100% of the length L1. Further, each of the laterally long blocks 6A and the vertically long blocks 6B in the present embodiment has the second block wall surface 16 formed only by the wall surface main body 21 without the chamfered portion 20 formed thereon. As shown in FIG. 4, the length L1 of the first block wall surface 15 of each of the laterally long blocks 6A is the sum of a length L1g, a length L1h, a length L1i, and a length L1j. The first block wall surface 15 and the second block wall surface 16 of each of the laterally long blocks 6A have a radial cross-sectional shape shown in FIGs. 3A and 3B respectively, for example.

As shown in FIG. 1, each of the laterally long blocks 6A is demarcated by the crown lateral grooves 10 adjacent to each other in the tire circumferential direction, one of the first shoulder circumferential grooves 3, and one of the first crown joint grooves 11A. Each of the vertically long blocks 6B is demarcated by the crown lateral grooves 10 adjacent to each other in the tire circumferential direction, one of the first shoulder circumferential grooves 3, and one of the second crown joint grooves 11B.

As shown in FIG. 4, each of the laterally long blocks 6A is provided with crown sipes 24. The crown sipes 24 include a first crown sipe 25 and a second crown sipe 26. The first crown sipe 25 has a first end (25i) connected with the first block wall surface 15 and a second end (25e) terminating within the ground contacting surface 13 to have a closed end. The term "closed end" means an end not connected with other sipes or grooves. The same applies hereinafter. The first crown sipe 25 extends linearly over the entire length thereof. The second crown sipe 26 has a first end (26i) connected with the second block wall surface 16 and a second end (26e) terminating within the ground contacting surface 13 to have a closed end. The second crown sipe 26 has a bent portion 27 bent at an obtuse angle between the first end and the second end. Thereby, the second crown sipe 26 is configured to have two linear portions connected at the bent portion 27. The laterally long blocks 6A configured as such exert a high edge effect and suppress a decrease in the block rigidity. In the present specification, a sipe refers to an incision having a width of less than 1.5 mm and is distinguished from a groove having a groove width of 1.5 mm or more.

As shown in FIG. 1, the crown blocks 5 include a plurality of second crown blocks 7 arranged axially inside the first crown blocks 6. Each of the second crown blocks 7 is arranged on the tire equator (C).

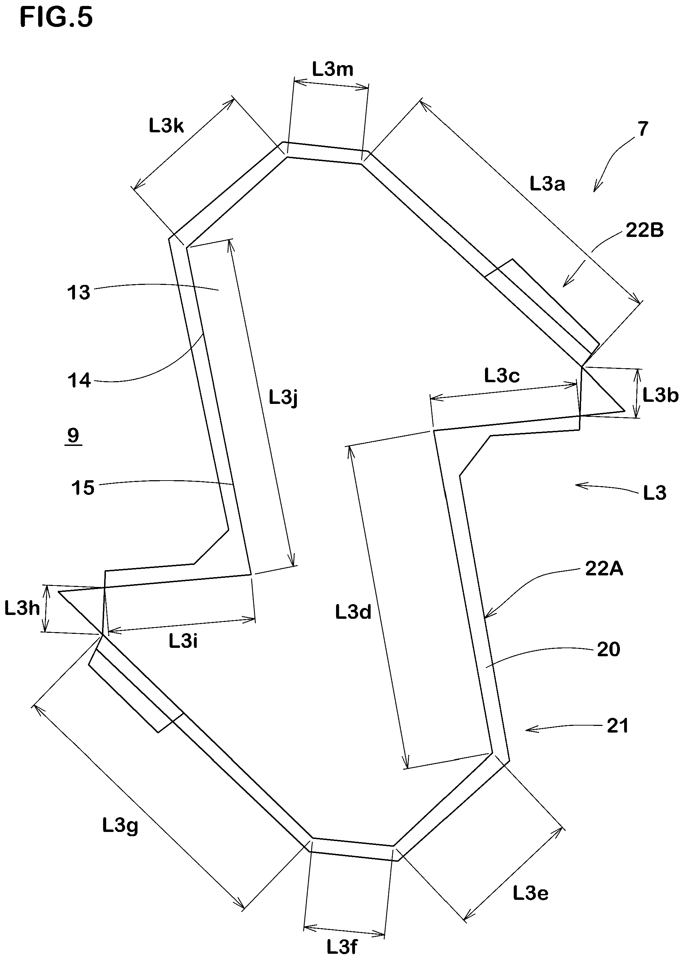

FIG. 5 is a plan view of one of the second crown blocks 7. As shown in FIG. 5, each of the second crown blocks 7 includes the ground contacting surface 13 and the block wall surface 14 extending radially inward from the ground contacting surface 13. The block wall surface 14 of each of the second crown blocks 7 is formed only by the first block wall surface 15 adjacent to one of the crown grooves 9. The block wall surface 14 of each of the second crown blocks 7 is provided with the chamfered portion 20 on the ground contacting surface 13 side in the range of 50% or more of a length L3 of the block wall surface 14 measured along the ground contacting surface 13. The second crown blocks 7 configured as such maintain the anti-wear performance even higher. The block wall surface 14 of each of the second crown blocks 7 has the chamfered portion 20 preferably in the range of 70% or more, and more preferably in the range of 85% or more of the length L3 of the block wall surface 14. In the present embodiment, the block wall surface 14 of each of the second crown blocks 7 has the chamfered portion 20 formed in the range of 100% of the length L3 of the block wall surface 14. In each of the second crown blocks 7, the length L3 of the block wall surface 14 is represented by the total sum of linearly extending portions, similar to the length L1 of the first block wall surface 15. In the case of the present embodiment, the length L1 is the sum of lengths (L3a) to (L3k) and a length (L3m). In FIG. 5, sipes disposed on the ground contacting surface 13 are omitted for convenience.

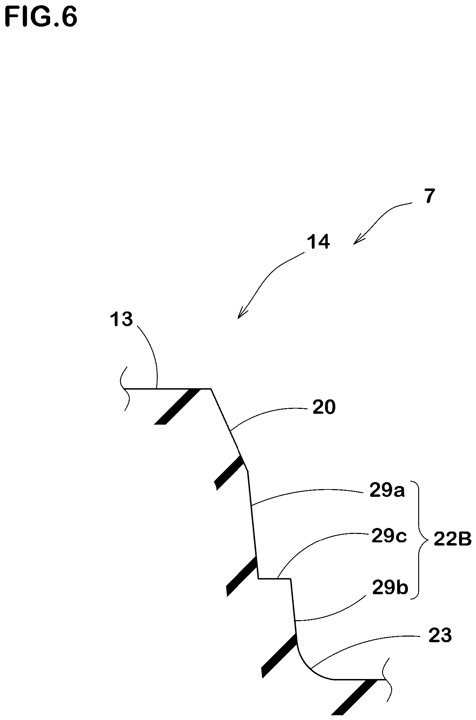

The block wall surface 14 of each of the second crown blocks 7 includes the chamfered portion 20 and the wall surface main body 21 extending radially inward from the chamfered portion 20. The wall surface main body 21 includes the linear portion 22 and the arcuate portion 23, for example. The linear portions 22 of the second crown blocks 7 include first portions 22A and second portions 22B. Each of the first portion 22A is formed similarly to the linear portion 22 of the first block wall surface 15 (shown in Figure 3A). FIG. 6 is a radial cross section of one of the second portions 22B and a C-C cross sectional view of FIG. 1. As shown in FIG. 6, each of the second portions 22B includes an outer portion (29a) connected to the chamfered portion 20, an inner portion (29b) connected to the arcuate portion 23, and a joint portion (29c) connecting the outer portion (29a) and the inner portion (29b). The joint portion (29c) is formed with a gentler slope having an angle with respect to the tire radial direction larger than the outer portion (29a) and the inner portion (29b), for example. The joint portion (29c) is formed parallel to the ground contacting surface 13 in the present embodiment.

The first portions 22A are provided on the block wall surfaces 14 adjacent to the crown lateral grooves 10 and the block wall surfaces 14 adjacent to the second crown joint grooves 11B, for example. The second portions 22B are provided only in the block wall surfaces 14 adjacent to the crown lateral grooves 10, for example.

In the tread plan view, a total area of the chamfered portions 20 is preferably 1% or more, more preferably 2% or more, and preferably 5% or less, and more preferably 4% or less of a total area of the ground contacting surfaces 13 of the crown blocks 5. Therefore, the anti-wear performance is maintained effectively.

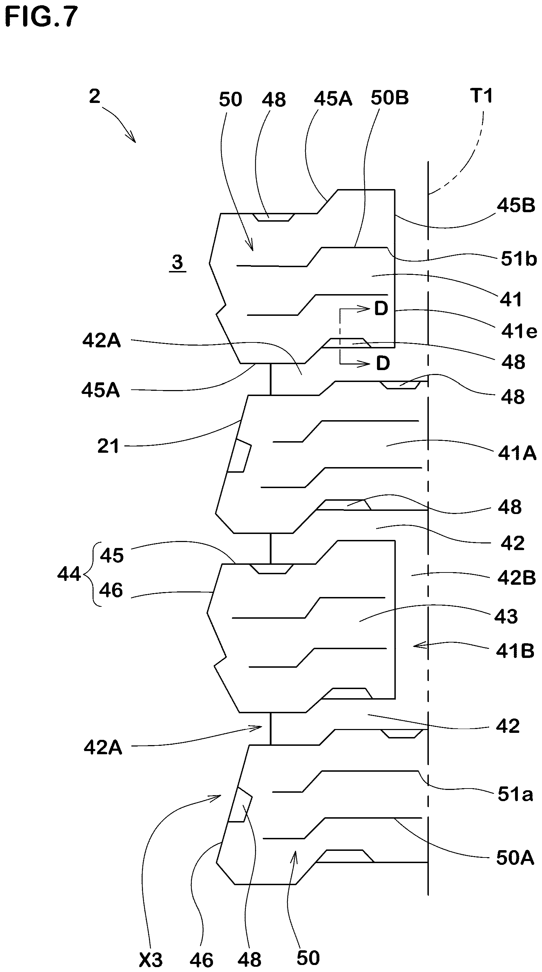

FIG. 7 is a plan view of the tread portion 2 outside the first shoulder circumferential groove 3 in the tire axial direction. As shown in FIG. 7, the tread portion 2 includes a plurality of shoulder blocks 41 arranged axially outside each of the first shoulder circumferential grooves 3 and a plurality of shoulder grooves 42 separating the shoulder blocks 41 from each other. Each of the shoulder grooves 42 extends axially outward from one of the first shoulder circumferential grooves 3.

Each of the shoulder blocks 41 includes a ground contacting surface 43 and a shoulder block wall surface 44 extending radially inward from the ground contacting surface 43. The shoulder block wall surface 44 includes third block wall surfaces 45 each adjacent to and facing a respective one of the shoulder grooves 42 and a fourth block wall surface 46 adjacent to and facing one of the first shoulder circumferential grooves 3.

The third block wall surfaces 45 are not provided with a chamfered portion on the ground contacting surface 43 side, for example. Further, the fourth block wall surface 46 does not have a chamfered portion on the ground contacting surface 43 side in the present embodiment. As a result, the on-snow performance is further improved. The third block wall surfaces 45 and the fourth block wall surface 46 are each formed of the wall surface main body 21 including the linear portion 22 and the arcuate portion 23 (shown in FIG. 3B) similar to the second block wall surface 16, for example. The third block wall surfaces 45 and the fourth block wall surface 46 are each formed only by the wall surface main body 21 in the present embodiment.

The shoulder grooves 42 include shoulder lateral groove portions 42A arranged in the tire circumferential direction and each extending from one of the first shoulder circumferential groove 3 to one of the first tread edges T1 adjacent thereto and shoulder longitudinal groove portions 42B each connecting the shoulder lateral groove portions 42A adjacent to each other in the tire circumferential direction, for example. Each of the shoulder longitudinal groove portions 42B extends on one of the first tread edges T1, for example.

The third block wall surfaces 45 include third lateral block wall surfaces 45A adjacent to the shoulder lateral groove portions 42A and third longitudinal block wall surfaces 45B facing the shoulder longitudinal groove portions 42B.

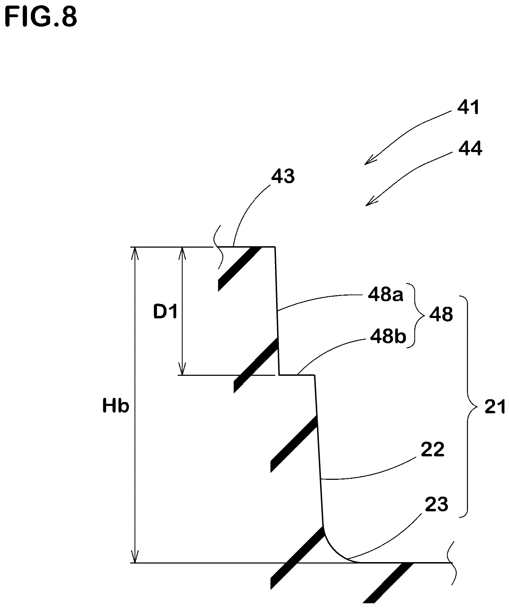

The shoulder block wall surfaces 44 include cutout portions 48 recessed toward inside of the ground contacting surface 43. It should be noted that the cutout portion 48 is recessed toward the center of the ground contacting surface 43 and recessed radially inward from the ground contacting surface 43 in the present embodiment, for example. FIG. 8 is a D-D cross sectional view of FIG. 7. As shown in FIG. 8, the cutout portion 48 is provided in the wall surface main body 21, for example. The wall surface main body 21 in the present embodiment includes the cutout portion 48, the linear portion 22, and the arcuate portion 23. Each of the cutout portions 48 includes a lateral facing surface (48a) extending radially inward from the ground contacting surface 43 and facing toward a groove center (groove center of the shoulder lateral groove portion 42A in this case) and an outward facing surface (48b) connected to the lateral facing surface (48a) and facing outward in the tire radial direction, for example. The cutout portions 48 configured as such increase the volume of snow to be sheared, therefore, the on-snow performance is further improved. The outward facing surface (48b) is connected to the linear portion 22, for example.

The cutout portions 48 are provided in the third lateral block wall surfaces 45A, for example. The cutout portions 48 are provided one on each third lateral block wall surface 45A, for example. The cutout portions 48 are also provided in the fourth block wall surfaces 46, for example. The cutout portions 48 are not provided in the third longitudinal block wall surfaces 45B in the present embodiment.

In the tread plan view, a total area of the cutout portions 48 is preferably 1% or more, more preferably 2% or more, and preferably 5% or less, and even more preferably 4% or less of a total area of the ground contacting surfaces 43 of the shoulder blocks 41. Since the total area of the cutout portions 48 is 1% or more of the total area of the ground contacting surfaces 43 of the shoulder blocks 41, the on-snow performance is improved when the external shapes of the shoulder blocks 41 are the same. Since the total area of the cutout portions 48 is 5% or less of the total area of the ground contacting surfaces 43 of the shoulder blocks 41, the anti-wear performance is maintained when the external shapes of the shoulder blocks 41 are the same.

A depth D1 of each of the cutout portions 48 is 10% or more, preferably 20% or more, and 40% or less of a height (Hb) in the tire radial direction of each of the shoulder blocks 41. As a result, the on-snow performance is further improved while the anti-wear performance is maintained.

The shoulder blocks 41 in the present embodiment include first shoulder blocks 41A and second shoulder blocks 41B each having an axial length smaller than each of the first shoulder blocks 41A. Each of the first shoulder blocks 41A is demarcated by a pair of the shoulder lateral groove portions 42A, one of the first tread edges T1, and one of the first shoulder circumferential grooves 3. Each of the second shoulder blocks 41B is demarcated by a pair of the shoulder lateral groove portions 42A, one of the shoulder longitudinal groove portions 42B, and one of the first shoulder circumferential grooves 3. Each of the second shoulder blocks 41B has an axially outer end (41e) located axially inside a respective one of the first tread edges T1.

The shoulder blocks 41 of the present embodiment are provided with shoulder sipes 50. The shoulder sipes include first shoulder sipes 50A provided in the first shoulder blocks 41A and second shoulder sipes 50B provided in the second shoulder blocks 41B. Each of the first shoulder sipes 50A has an axially outer end (51a) terminating axially inside a respective one of the first tread edges T1 to have a closed end, for example. Each of the second shoulder sipes 50B has an axially outer end (51b) terminating to have a closed end within the ground contacting surface 43 without connecting to one of the shoulder longitudinal groove portions 42B, for example.

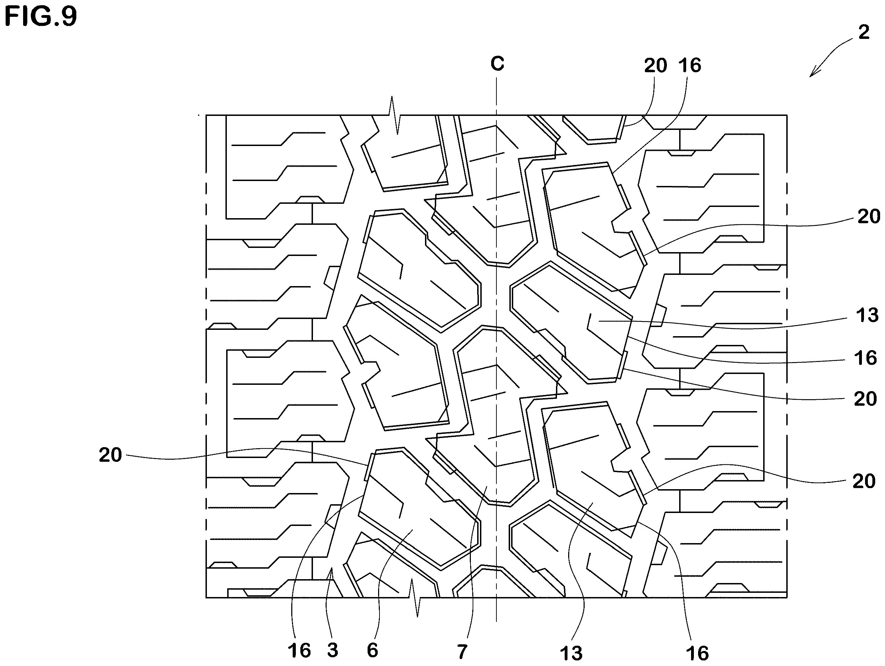

FIG. 9 is a plan view of the tread portion 2 according to another embodiment. The same reference numerals are assigned to configurations same as those of the previously described embodiment, and the descriptions thereof are omitted. As shown in FIG. 9, in each of the crown blocks in the tread portion 2 of this embodiment, the second block wall surface 16 is provided with the chamfered portion 20 formed on the ground contacting surface 13 side in the range from 35% to 45% of the length L2 of the second block wall surface 16 measured along the ground contacting surface 13. Even in the tire 1 configured as such, the on-snow performance is further improved while the anti-wear performance is maintained.

While detailed description has been made of an especially preferred embodiment of the present invention, the present invention can be embodied in various forms within the scope of the appended claims.

### Description of Reference Signs

- 1: tire
- 3: first shoulder circumferential groove
- 6: first crown block
- 9: crown groove
- 13: ground contacting surface
- 14: block wall surface
- 15: first block wall surface
- 16: second block wall surface
- 20: chamfered portion
- L1: length of first block wall surface
- L2: length of second block wall surface

## Claims

1. A tire (1) comprising a tread portion (2) wherein
the tread portion (2) includes
a first tread edge (T1),
a first shoulder circumferential groove (3) adjacent to the first tread edge (T1) and arranged between the first tread edge (T1) and a tire equator (C),
a plurality of crown blocks (5) arranged inside the first shoulder circumferential groove (3) in a tire axial direction, and
a plurality of crown grooves (9) arranged axially inside the first shoulder circumferential groove (3) to separate the crown blocks (5) from each other,
the crown blocks include (5) a plurality of first crown blocks (6) adjacent to the first shoulder circumferential groove (3),
each of the first crown blocks (6) includes a ground contacting surface (13) and a block wall surface (14) extending inward in a tire radial direction from the ground contacting surface (13),
the block wall surface (14) includes a first block wall surface (15) adjacent to one of the crown grooves (9) and a second block wall surface (16) adjacent to the first shoulder circumferential groove (3),
the first block wall surface (15) is provided with a chamfered portion (20) on the ground contacting surface (13) side in a range of 50% or more of a length (L1) of the first block wall surface (15) measured along the ground contacting surface (13), and
the second block wall surface (16) is either not provided with the chamfered portion on the ground contacting surface (13) side or provided with the chamfered portion (20) on the ground contacting surface side (13) in a range of less than 50% of a length (L2) of the second block wall surface (16) measured along the ground contacting surface (13),
the tread portion (2) further includes a plurality of shoulder blocks (41) arranged axially outside the first shoulder circumferential groove (3) and a plurality of shoulder grooves (42) extending axially outward from the first shoulder circumferential groove (3) to separate the shoulder blocks (41) from each other,
each of the shoulder blocks (41) includes a ground contacting surface (43) and a shoulder block wall surface (44) extending radially inward from the ground contacting surface (43),
the shoulder block wall surface (44) includes a third block wall surface (45) adjacent to one of the shoulder grooves (42) and a fourth block wall surface (46) adjacent to the first shoulder circumferential groove (3), and
the third block wall surface (45) is not provided with the chamfered portion on the ground contacting surface (43) side,
**characterized in that**
the shoulder block wall surface (44) includes a cutout portion (48) recessed toward inside of the ground contacting surface (43), and
the cutout portion (48) has a depth (D1) in the tire radial direction of 10% or more and 40% or less of a height (Hb) in the tire radial direction of the each of the shoulder blocks (41).

2. The tire according to claim 1, wherein the first block wall surface (15) is provided with the chamfered portion (20) in the range of 100% of the length (L1) of the first block wall surface (15).

3. The tire (1) according to claim 1 or 2, wherein
the first block wall surface (15) includes a wall surface main body (21) extending radially inward from the chamfered portion (20), and
a difference (θ1-θ2) between an angle θ1 of the chamfered portion (20) with respect to a normal line (N1) of the ground contacting surface (13) and an angle θ2 of the wall surface main body (21) with respect to the normal line (n1) is 10 degrees or more and 30 degrees or less.

4. The tire (1) according to any one of claims 1 to 3, wherein the chamfered portion (20) has a length (H1) in the tire radial direction of 20% or more and 40% or less of a length (Ha) in the tire radial direction of the block wall surface (14).

5. The tire (1) according to any one of claims 1 to 4, wherein an angle θ1 of the chamfered portion (20) with respect to a normal line (n1) of the ground contacting surface (13) is 10 degrees or more and 30 degrees or less.

6. The tire (1) according to any one of claims 1 to5, wherein the fourth block wall surface (46) is not provided with the chamfered portion on the ground contacting surface side (43).

7. The tire (1) according to claim any one of claims 1 to 6, wherein a total area of the recessed portions of the shoulder block wall surfaces of the shoulder blocks is 1% or more and 5% or less of a total area of the ground contacting surfaces (43) of the shoulder blocks (41) in a tread plan view.

8. The tire (1) according to any one of claims 1 to 7, wherein
the crown blocks (5) include a plurality of second crown blocks (7) arranged axially inside the first crown blocks (6),
each of the second crown blocks (7) includes a ground contacting surface (13) and a block wall surface (14) extending radially inward from the ground contacting surface (13), and
in each of the second crown blocks (7), the block wall surface (14) is provided with a chamfered portion (20) on the ground contacting surface (13) side in a range of 50% or more of a length (L3) of the block wall surface (14) measured along the ground contacting surface (13).

9. The tire (1) according to claim 8, wherein a total area of the chamfered portions (20) of the crown blocks is 1% or more and 5% or less of a total area of the ground contacting surfaces (13) of the crown blocks (5) in a tread plan view.

## Patentansprüche

1. Reifen (1) mit einem Laufflächenabschnitt (2), wobei
der Laufflächenabschnitt (2) umfasst
eine erste Laufflächenkante (T1),
eine erste Schulterumfangsrille (3), die benachbart zu der ersten Laufflächenkante (T1) ist und zwischen der ersten Laufflächenkante (T1) und einem Reifenäquator (C) angeordnet ist,
eine Vielzahl von Kronenblöcken (5), die in einer Reifenaxialrichtung innen von der ersten Schulterumfangsrille (3) angeordnet sind, und
eine Vielzahl von Kronenrillen (9), die axial innen von der ersten Schulterumfangsrille (3) angeordnet sind, um die Kronenblöcke (5) voneinander zu trennen,
die Kronenblöcke (5) eine Vielzahl von ersten Kronenblöcken (6) umfassen, die benachbart zu der ersten Schulterumfangsrille (3) sind,
jeder der ersten Kronenblöcke (6) eine Bodenkontaktfläche (13) und eine Blockwandfläche (14) umfasst, die sich von der Bodenkontaktfläche (13) in einer Reifenradialrichtung nach innen erstreckt,
die Blockwandfläche (14) eine erste Blockwandfläche (15), die benachbart zu einer der Kronenrillen (9) ist, und eine zweite Blockwandfläche (16) umfasst, die benachbart zu der ersten Schulterumfangsrille (3) ist,
die erste Blockwandfläche (15) mit einem abgeschrägten Abschnitt (20) auf der Seite der Bodenkontaktfläche (13) in einem Bereich von 50 % oder mehr einer Länge (L1) der ersten Blockwandfläche (15), gemessen entlang der Bodenkontaktfläche (13), versehen ist, und
die zweite Blockwandfläche (16) entweder nicht mit dem abgeschrägten Abschnitt auf der Seite der Bodenkontaktfläche (13) versehen ist oder mit dem abgeschrägten Abschnitt (20) auf der Seite der Bodenkontaktfläche (13) in einem Bereich von weniger als 50 % einer Länge (L2) der zweiten Blockwandfläche (16), gemessen entlang der Bodenkontaktfläche (13), versehen ist,
der Laufflächenabschnitt (2) ferner eine Vielzahl von Schulterblöcken (41), die axial außen von der ersten Schulterumfangsrille (3) angeordnet sind, und eine Vielzahl von Schulterrillen (42) umfasst, die sich von der ersten Schulterumfangsrille (3) axial nach außen erstrecken, um die Schulterblöcke (41) voneinander zu trennen,
jeder der Schulterblöcke (41) eine Bodenkontaktfläche (43) und eine Schulterblockwandfläche (44) umfasst, die sich von der Bodenkontaktfläche (43) radial nach innen erstreckt,
die Schulterblockwandfläche (44) eine dritte Blockwandfläche (45), die benachbart zu einer der Schulterrillen (42) ist, und eine vierte Blockwandfläche (46) umfasst, die benachbart zu der ersten Schulterumfangsrille (3) ist, und
die dritte Blockwandfläche (45) nicht mit dem abgeschrägten Abschnitt auf der Seite der Bodenkontaktfläche (43) versehen ist,
**dadurch gekennzeichnet, dass**
die Schulterblockwandfläche (44) einen ausgeschnittenen Abschnitt (48) umfasst, der in Richtung der Innenseite der Bodenkontaktfläche (43) ausgespart ist, und
der ausgeschnittene Abschnitt (48) eine Tiefe (D1) in der Reifenradialrichtung von 10 % oder mehr und 40 % oder weniger einer Höhe (Hb) in der Reifenradialrichtung von jedem der Schulterblöcke (41) aufweist.

2. Reifen nach Anspruch 1, wobei die erste Blockwandfläche (15) mit dem abgeschrägten Abschnitt (20) in dem Bereich von 100 % der Länge (L1) der ersten Blockwandfläche (15) versehen ist.

3. Reifen (1) nach Anspruch 1 oder 2, wobei
die erste Blockwandfläche (15) einen Wandflächenhauptkörper (21) umfasst, der sich von dem abgeschrägten Abschnitt (20) radial nach innen erstreckt, und
eine Differenz (θ1-θ2) zwischen einem Winkel θ1 des abgeschrägten Abschnitts (20) in Bezug auf eine Normale (N1) der Bodenkontaktfläche (13) und einem Winkel θ2 des Wandflächenhauptkörpers (21) in Bezug auf die Normale (N1) 10 Grad oder mehr und 30 Grad oder weniger beträgt.

4. Reifen (1) nach einem der Ansprüche 1 bis 3, wobei der abgeschrägte Abschnitt (20) eine Länge (H1) in der Reifenradialrichtung von 20 % oder mehr und 40 % oder weniger einer Länge (Ha) in der Reifenradialrichtung der Blockwandfläche (14) aufweist.

5. Reifen (1) nach einem der Ansprüche 1 bis 4, wobei ein Winkel θ1 des abgeschrägten Abschnitts (20) in Bezug auf eine Normale (n1) der Bodenkontaktfläche (13) 10 Grad oder mehr und 30 Grad oder weniger beträgt.

6. Reifen (1) nach einem der Ansprüche 1 bis 5, wobei die vierte Blockwandfläche (46) nicht mit dem abgeschrägten Abschnitt auf der Seite der Bodenkontaktfläche (43) versehen ist.

7. Reifen (1) nach einem der Ansprüche 1 bis 6, wobei eine Gesamtfläche der ausgesparten Abschnitte der Schulterblockwandflächen der Schulterblöcke 1 % oder mehr und 5 % oder weniger einer Gesamtfläche der Bodenkontaktflächen (43) der Schulterblöcke (41) in einer Laufflächendraufsicht beträgt.

8. Reifen (1) nach einem der Ansprüche 1 bis 7, wobei
die Kronenblöcke (5) eine Vielzahl von zweiten Kronenblöcken (7) umfassen, die axial innen von den ersten Kronenblöcken (6) angeordnet sind,
jeder der zweiten Kronenblöcke (7) eine Bodenkontaktfläche (13) und eine Blockwandfläche (14) umfasst, die sich von der Bodenkontaktfläche (13) radial nach innen erstreckt, und
in jedem der zweiten Kronenblöcke (7) die Blockwandfläche (14) mit einem abgeschrägten Abschnitt (20) auf der Seite der Bodenkontaktfläche (13) in einem Bereich von 50 % oder mehr einer Länge (L3) der Blockwandfläche (14), gemessen entlang der Bodenkontaktfläche (13), versehen ist.

9. Reifen (1) nach Anspruch 8, wobei eine Gesamtfläche der abgeschrägten Abschnitte (20) der Kronenblöcke 1 % oder mehr und 5 % oder weniger einer Gesamtfläche der Bodenkontaktflächen (13) der Kronenblöcke (5) in einer Laufflächendraufsicht beträgt.

## Revendications

1. Pneumatique (1) comprenant une portion formant bande de roulement (2) dans lequel
la portion formant bande de roulement (2) inclut
un premier bord de bande de roulement (T1),
une première rainure circonférentielle d'épaulement (3) adjacente au premier bord de bande de roulement (T1) et agencée entre le premier bord de bande de roulement (T1) et un équateur de pneumatique (C),
une pluralité de blocs de couronne (5) agencés à l'intérieur de la première rainure circonférentielle d'épaulement (3) dans une direction axiale du pneumatique, et
une pluralité de rainures de couronne (9) agencées axialement à l'intérieur de la première rainure circonférentielle d'épaulement (3) pour séparer les blocs de couronne (5) les uns des autres,
les blocs de couronne (5) incluent une pluralité de premiers blocs de couronne (6) adjacents à la première rainure circonférentielle d'épaulement (3),
chacun des premiers blocs de couronne (6) inclut une surface de contact au sol (13) et une surface de paroi de bloc (14) s'étendant vers l'intérieur dans une direction radiale du pneumatique depuis la surface de contact au sol (13),
une surface de paroi de bloc (14) inclut une première surface de paroi de bloc (15) adjacente à l'une des rainures de couronne (9) et une deuxième surface de paroi de bloc (16) adjacente à la première rainure circonférentielle d'épaulement (3),
la première surface de paroi de bloc (15) est dotée d'une portion chanfreinée (20) sur le côté de la surface de contact au sol (13) dans une plage de 50 % ou plus d'une longueur (L1) de la première surface de paroi de bloc (15) mesurée le long de la surface de contact au sol (13), et
la deuxième surface de paroi de bloc (16) est soit non dotée de la portion chanfreinée sur le côté de la surface de contact au sol (13), soit dotée de la portion chanfreinée (20) sur le côté de la surface de contact au sol (13) dans une plage qui est inférieure à 50 % d'une longueur (L2) de la deuxième surface de paroi de bloc (16) mesurée le long de la surface de contact au sol (13),
la portion formant bande de roulement (2) inclut en outre une pluralité de blocs d'épaulement (41) agencés axialement à l'extérieur de la première rainure circonférentielle d'épaulement (3) et une pluralité de rainures d'épaulement (42) s'étendant axialement vers l'extérieur depuis la première rainure circonférentielle d'épaulement (3) pour séparer les blocs d'épaulement (41) les uns des autres,
chacun des blocs d'épaulement (41) inclut une surface de contact au sol (43) et une surface de paroi de bloc d'épaulement (44) s'étendant radialement vers l'intérieur depuis la surface de contact au sol (43),
la surface de paroi de bloc d'épaulement (44) inclut une troisième surface de paroi de bloc (45) adjacente à l'une des rainures d'épaulement (42) et une quatrième surface de paroi de bloc (46) adjacente à la première rainure circonférentielle d'épaulement (3), et
la troisième surface de paroi de bloc (45) n'est pas dotée de la portion chanfreinée sur le côté de la surface de contact au sol (43),
**caractérisé en ce que**
la surface de paroi de bloc d'épaulement (44) inclut une portion découpée (48) évidée vers l'intérieur de la surface de contact au sol (43), et la portion découpée (48) a une profondeur (D1) dans la direction radiale du pneumatique de 10 % ou plus et de 40 % ou moins d'une hauteur (Hb) dans la direction radiale du pneumatique de chacun des blocs d'épaulement (41).

2. Pneumatique selon la revendication 1, dans lequel la première surface de paroi de bloc (15) est dotée de la portion chanfreinée (20) dans la plage de 100 % de la longueur (L1) de la première surface de paroi de bloc (15).

3. Pneumatique (1) selon la revendication 1 ou 2, dans lequel
la première surface de paroi de bloc (15) inclut un corps principal de surface de paroi (21) s'étendant radialement vers l'intérieur depuis la portion chanfreinée (20), et
une différence (θ1-θ2) entre un angle θ1 de la portion chanfreinée (20) par rapport à une ligne normale (N1) de la surface de contact au sol (13) et un angle θ2 du corps principal de surface de paroi (21) par rapport à la ligne normale (n1) est de 10 degrés ou plus et de 30 degrés ou moins.

4. Pneumatique (1) selon l'une quelconque des revendications 1 à 3, dans lequel la portion chanfreinée (20) a une longueur (H1) dans la direction radiale du pneumatique de 20 % ou plus et de 40 % ou moins d'une longueur (Ha) dans la direction radiale du pneumatique de la surface de paroi de bloc (14).

5. Pneumatique (1) selon l'une quelconque des revendications 1 à 4, dans lequel un angle θ1 de la portion chanfreinée (20) par rapport à une ligne normale (n1) de la surface de contact au sol (13) est de 10 degrés ou plus et de 30 degrés ou moins.

6. Pneumatique (1) selon l'une quelconque des revendications 1 à 5, dans lequel la quatrième surface de paroi de bloc (46) n'est pas dotée de la portion chanfreinée sur le côté de la surface de contact au sol (43).

7. Pneumatique (1) selon l'une quelconque des revendications 1 à 6, dans lequel une aire totale des portions évidées des surfaces de parois de blocs d'épaulement des blocs d'épaulement est de 1 % ou plus et de 5 % ou moins d'une aire totale des surfaces de contact au sol (43) des blocs d'épaulement (41) dans une vue en plan de la bande de roulement.

8. Pneumatique (1) selon l'une quelconque des revendications 1 à 7, dans lequel
les blocs de couronne (5) incluent une pluralité de seconds blocs de couronne (7) agencés axialement à l'intérieur des premiers blocs de couronne (6),
chacun des seconds blocs de couronne (7) inclut une surface de contact au sol (13) et une surface de paroi de bloc (14) s'étendant radialement vers l'intérieur depuis la surface de contact au sol (13), et
dans chacun des seconds blocs de couronne (7), la surface de paroi de bloc (14) est dotée d'une portion chanfreinée (20) sur le côté de la surface de contact au sol (13) dans une plage de 50 % ou plus d'une longueur (L3) de la surface de paroi de bloc (14) mesurée le long de la surface de contact au sol (13).

9. Pneumatique (1) selon la revendication 8, dans lequel une aire totale des portions chanfreinées (20) des blocs de couronne est de 1 % ou plus et de 5 % ou moins d'une aire totale des surfaces de contact au sol (13) des blocs de couronne (5) dans une vue en plan de la bande de roulement.
